(19) Europäisches Patentamt
European Patent Office
Office européen des brevets

(11) **EP 3 333 502 B1**

(12) **EUROPEAN PATENT SPECIFICATION**

(45) Date of publication and mention
of the grant of the patent:
**25.03.2020 Bulletin 2020/13**

(21) Application number: **15900962.0**

(22) Date of filing: **07.08.2015**

(51) Int Cl.:
*F25B 25/00* (2006.01)     *F24D 11/02* (2006.01)
*F24H 1/00* (2006.01)     *F24D 19/10* (2006.01)
*F25B 30/02* (2006.01)

(86) International application number:
**PCT/JP2015/072523**

(87) International publication number:
**WO 2017/026007 (16.02.2017 Gazette 2017/07)**

(54) **HEAT PUMP SYSTEM**

WÄRMEPUMPENSYSTEM

SYSTÈME DE POMPE À CHALEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**13.06.2018 Bulletin 2018/24**

(73) Proprietor: **Mitsubishi Electric Corporation
Chiyoda-ku
Tokyo 100-8310 (JP)**

(72) Inventors:
• **HIROSAKI, Hiroki
Tokyo 100-8310 (JP)**
• **SAWAMURA, Naoki
Tokyo 100-8310 (JP)**

(74) Representative: **Pfenning, Meinig & Partner mbB
Patent- und Rechtsanwälte
Joachimsthaler Straße 10-12
10719 Berlin (DE)**

(56) References cited:
EP-A1- 2 261 574     JP-A- 2002 243 276
JP-A- 2003 240 344     JP-A- 2004 347 148
JP-A- 2005 098 546     JP-A- 2006 200 843
JP-A- 2011 252 675     JP-A- 2012 082 987

**Description**

[Technical Field]

The present invention relates to a heat pump system.

[Background Art]

Heat pump systems that heat a liquid heating medium such as water using heat absorbed from outside air are widely used. In a heat pump water heater disclosed in PTL 1 described below, a rotational speed of a compressor at a start of operation is determined based on set outflow hot water temperature, detected inflow water temperature, and detected outside air temperature. After the start of operation, the rotational speed of the compressor is controlled so as to be changed such that detected outflow hot water temperature matches the set outflow hot water temperature. In other words, the rotational speed of the compressor is increased when the detected outflow hot water temperature is lower than the set outflow hot water temperature but, conversely, the rotational speed of the compressor is reduced when the detected outflow hot water temperature is higher than the set outflow hot water temperature.

In a heat pump water heater disclosed in PTL 2 described below, an initial frequency at a start of operation of a compressor is determined in accordance with water temperature in a bottom part of a hot water storage tank. In control during a stable operation, a deviation E between outlet water temperature Twout and set temperature Tsc of a heat exchanger and an amount of variation $\Delta E$ (a difference between a current value of Twout and a previous value of Twout obtained 60 seconds ago) are calculated every 60 seconds, a correction value $\Delta fi$ of a frequency command signal fi is obtained in accordance with E and $\Delta E$, and a current frequency command signal fi is corrected.

PTL3 discloses a heat pump system having the features of the preamble of claim 1. This document relates to a heat-pump hot water apparatus in which the rotation speed of the compressor is controlled using the difference between a heating-up set temperature and a detected water outlet temperature. Additionally, a rotation speed of a circulation pump is controlled using the outside temperature and the water inlet temperature, a heating-up target temperature and a value of the required heating capacity.

[Citation List]

[Patent Literature]

[PTL 1] Japanese Patent Application Laid-open No. 2012-233626
[PTL 2] Japanese Patent Application Laid-open No. 2002-243276
[PTL 3] European Patent Application Laid-open No. EP 2 261 574 A1

[Summary of Invention]

[Technical Problem]

The conventional heat pump water heaters described above have the following problems. A correction value added to the rotational speed or the frequency of a compressor during operation is independent of outside air temperature. Therefore, when the outside air temperature is high, the correction value may possibly become excessive. When the outside air temperature is low, the correction value may possibly become insufficient. As a result, it is difficult to stabilize a state of a refrigerant circuit and a likelihood of an occurrence of an overshoot or undershoot of temperature of a heating medium flowing out from a heating heat exchanger may increase.

The present invention has been made in order to solve problems such as that described above, and an object thereof is to provide a heat pump system capable of reliably preventing an overshoot and an undershoot of temperature of a heating medium flowing out from a heating heat exchanger and improving efficiency by stabilizing a state of a refrigerant circuit regardless of whether outside air temperature is high or low.

[Solution to Problem]

A heat pump system of the invention includes: a compressor configured to compress a refrigerant; a heating heat exchanger configured to exchange heat between the refrigerant compressed by the compressor and a liquid heating medium; a decompressor configured to decompress the refrigerant; an evaporator configured to exchange heat between the refrigerant decompressed by the decompressor and outside air; outside air temperature detection means configured to detect outside air temperature; outlet temperature detection means configured to detect outlet temperature, the outlet temperature being temperature of the heating medium flowing out from the heating heat exchanger; compressor control means configured to control an operating frequency of the compressor in accordance with a sum of a fundamental frequency and a correction frequency; fundamental frequency calculation means configured to calculate the fundamental frequency in accordance with a temperature difference obtained by subtracting current outlet temperature from target outlet temperature and in accordance with current outside air temperature; and first correction means configured to add a positive first correction value to the correction frequency when the temperature difference is larger than a positive first reference value and a temporal variation in the outlet temperature is smaller than a reference.

[Advantageous Effects of Invention]

With the heat pump system according to the present invention, by including: compressor control means for controlling an operating frequency of a compressor in accordance with a sum of a fundamental frequency and a correction frequency; fundamental frequency calculation means for calculating the fundamental frequency in accordance with a temperature difference obtained by subtracting current outlet temperature from target outlet temperature and in accordance with current outside air temperature; and first correction means for adding a positive first correction value to the correction frequency when the temperature difference is larger than a positive first reference value and a temporal variation in the outlet temperature is smaller than a reference, an overshoot and an undershoot of temperature of a heating medium flowing out from a heating heat exchanger can be reliably prevented and efficiency can be improved by stabilizing a state of a refrigerant circuit regardless of whether outside air temperature is high or low.

[Brief Description of Drawings]

Fig. 1 is a configuration diagram showing a heat pump system according to a first embodiment.
Fig. 2 is a functional block diagram of the heat pump system according to the first embodiment.
Fig. 3 is a flow chart of a routine executed by a first controller of the heat pump system according to the first embodiment.
Fig. 4 is a diagram showing an example of a hardware configuration of the first controller or a second controller included in the heat pump system according to the first embodiment.
Fig. 5 is a diagram showing another example of the hardware configuration of the first controller or the second controller included in the heat pump system according to the first embodiment.
Fig. 6 is a flow chart of a routine executed by a first controller of a heat pump system according to a second embodiment.

[Description of Embodiments]

Hereinafter, embodiments will be described with reference to the drawings. Note that common elements in the drawings are denoted by same reference signs and overlapping descriptions will be simplified or omitted. Moreover, generally, the numbers, arrangements, orientations, shapes, and sizes of apparatuses, instruments, parts, and the like according to the present invention are not limited to the numbers, arrangements, orientations, shapes, and sizes depicted in the drawings.

First embodiment

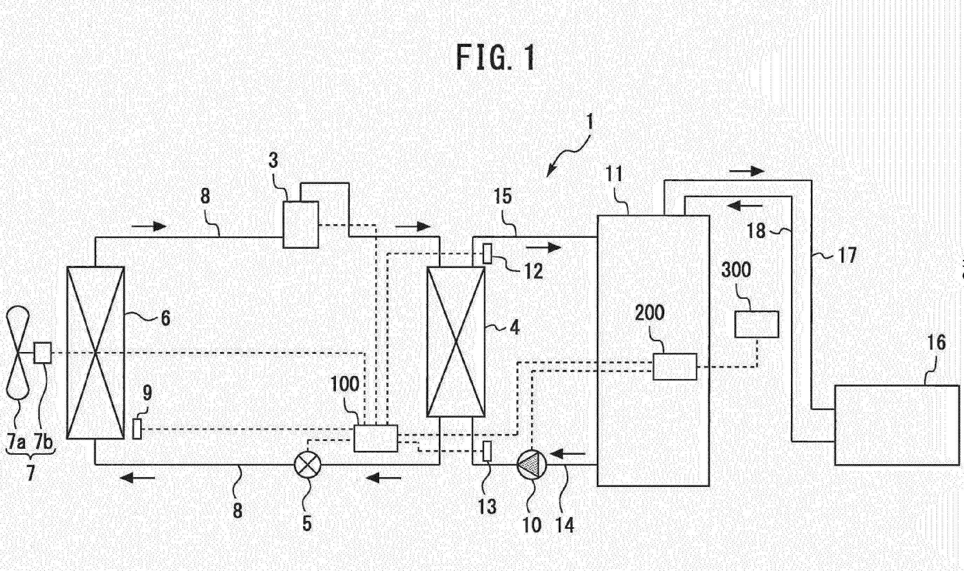

Fig. 1 is a configuration diagram showing a heat pump system according to a first embodiment. As shown in Fig. 1, a heat pump system 1 according to the present embodiment includes a compressor 3, a heating heat exchanger 4, a decompressor 5, an evaporator 6, and an air blower 7.
The compressor 3 compresses a refrigerant gas. A type of the refrigerant is not particularly limited. The refrigerant may be of a type such that pressure of a high pressure refrigerant compressed by the compressor 3 reaches supercritical pressure (for example, $CO_2$) or a type such that pressure of a high pressure refrigerant compressed by the compressor 3 is lower than critical pressure. The heating heat exchanger 4 heats a liquid heating medium by exchanging heat between a high pressure refrigerant compressed by the compressor 3 and the heating medium. As the heating medium, for example, water, a calcium chloride aqueous solution, an ethylene glycol aqueous solution, and alcohol can be used. The heating heat exchanger 4 includes a refrigerant passage and a heating medium passage. The compressor 3, the refrigerant passage of the heating heat exchanger 4, the decompressor 5, and the evaporator 6 form a refrigerant circuit by being annularly connected via a refrigerant piping 8. The heat pump system 1 performs a heat pump cycle (refrigerating cycle) operation with the refrigerant circuit.

The decompressor 5 decompresses a high pressure refrigerant having passed through the heating heat exchanger 4. An expansion valve with a variable opening can be used as the decompressor 5. By passing through the decompressor 5, the high pressure refrigerant becomes a low pressure refrigerant in a gas-liquid two-phase state. The evaporator 6 is a heat exchanger which exchanges heat between the low pressure refrigerant decompressed by the decompressor 5 and outside air. Outside air refers to outdoor air. The low pressure refrigerant in the gas-liquid two-phase state evaporates by absorbing heat from outside air in the evaporator 6. The low pressure refrigerant gas having evaporated in the evaporator 6 is suctioned by the compressor 3.

The air blower 7 blows air so that outside air is supplied to the evaporator 6. The air blower 7 includes a fan 7a and a motor 7b. The fan 7a rotates by being driven by the motor 7b. The air blower 7 blows air from right to left in Fig. 1. Outside air passes through the evaporator 6 and the air blower 7 in this order. The heat pump system 1 includes an outside air temperature sensor 9. The outside air temperature sensor 9 is an example of outside air temperature detection means which detects outside air temperature. The outside air temperature sensor 9 detects the temperature of outside air before the outside air is cooled by the evaporator 6.

The heat pump system 1 according to the present embodiment includes a circulation pump 10, a heat storage tank 11, an outlet temperature sensor 12, and an inlet temperature sensor 13. The circulation pump 10 causes the heating medium to flow to the heating medium passage of the heating heat exchanger 4. The heat storage tank 11 is capable of storing the heating medium prior to heating and the heating medium after being heated. In the heat storage tank 11, temperature stratification with a high-temperature upper side and a low-temperature lower side may be formed due to a difference in density of the heating medium caused by a difference in temperatures. The heat storage tank 11 may include a plurality of temperature sensors (not shown) which detect a temperature distribution in a vertical direction of the heating medium inside the heat storage tank 11. By detecting a temperature distribution in the vertical direction of the heating medium inside the heat storage tank 11, an amount of stored heat in the heat storage tank 11 can be calculated.

A first pipe 14 connects a lower part of the heat storage tank 11 and an inlet of the heating medium passage of the heating heat exchanger 4. A second pipe 15 connects an outlet of the heating medium passage of the heating heat exchanger 4 and an upper part of the heat storage tank 11. In the illustrated configuration, the circulation pump 10 is arranged midway along the first pipe 14. The circulation pump 10 is not limited to the illustrated configuration and may be arranged midway along the second pipe 15. The operation of the circulation pump 10 causes the heating medium having flowed out from the lower part of the heat storage tank 11 to be sent to the heating heat exchanger 4 through the first pipe 14. The heating medium heated by the heating heat exchanger 4 is sent to the upper part of the heat storage tank 11 through the second pipe 15.

The outlet temperature sensor 12 detects temperature (hereinafter, referred to as "outlet temperature") of the heating medium flowing out from the heating heat exchanger 4. The outlet temperature sensor 12 is arranged in the second pipe 15. The outlet temperature sensor 12 detects the temperature of the heating medium after being heated by the heating heat exchanger 4. The outlet temperature sensor 12 is an example of outlet temperature detection means. The inlet temperature sensor 13 detects temperature (hereinafter, referred to as "inlet temperature") of the heating medium flowing into the heating heat exchanger 4. The inlet temperature sensor 13 is arranged in the first pipe 14. The inlet temperature sensor 13 detects the temperature of the heating medium prior to being heated by the heating heat exchanger 4.

The heat storage tank 11 is connected to an indoor-heating appliance 16 via a third pipe 17 and a fourth pipe 18. The third pipe 17 connects a heating medium outlet in the upper part of the heat storage tank 11 to a heating medium inlet of the indoor-heating appliance 16. The fourth pipe 18 connects a heating medium outlet of the indoor-heating appliance 16 and a heating medium return port in the upper part of the heat storage tank 11. The heating medium return port to which the fourth pipe 18 is connected may be positioned in the lower part or an intermediate-height part of the heat storage tank 11. The heating medium stored in the heat storage tank 11 is sent by a pump (not shown) to the indoor-heating appliance 16 through the third pipe 17. The indoor-heating appliance 16 heats indoor air with the heat of the heating medium. As the indoor-heating appliance 16, for example, a floor heating panel, a radiator, a panel heater, or a fan convector can be used. A plurality of indoor-heating appliances 16 may be connected between the third pipe 17 and the fourth pipe 18. In this case, a method of connection of the plurality of the indoor-heating appliance 16 may be any of series, parallel, and a combination of series and parallel.

In the present embodiment, the heating medium heated by the heating heat exchanger 4 is supplied to the indoor-heating appliance 16 via the heat storage tank 11. Such a configuration is not restrictive and, alternatively, the heating medium heated by the heating heat exchanger 4 may be directly supplied to the indoor-heating appliance 16 without involving the heat storage tank 11. In addition, a hot water supply pipe (not shown) which supplies hot water stored in the heat storage tank 11 to a hot water supply destination may be connected to the heat storage tank 11. A water supply pipe (not shown) which supplies water from a water source such as tap water may be connected to the heat storage tank 11.

A chassis (not shown) housing the compressor 3, the heating heat exchanger 4, the decompressor 5, the evaporator 6, and the air blower 7 and a chassis (not shown) housing the heat storage tank 11 may be separately provided or may be integrated with one another. When the chassis are separately provided, the circulation pump 10 may be housed in any of the chassis.

The heat pump system 1 according to the present embodiment includes a first controller 100, a second controller 200, and a remote control apparatus 300. The compressor 3, the decompressor 5, the air blower 7, the outside air temperature sensor 9, the outlet temperature sensor 12, and the inlet temperature sensor 13 are electrically connected to the first controller 100. The first controller 100 controls operations of the compressor 3, the decompressor 5, and the air blower 7. The circulation pump 10 is electrically connected to the second controller 200. The second controller 200 controls operations of the circulation pump 10.

The first controller 100 and the second controller 200 are connected to each other by wired communication or wireless communication so as to be capable of two-way data communication. The second controller 200 and the remote control apparatus 300 are connected to each other by wired communication or wireless communication so as to be capable of two-way data communication. The remote control apparatus 300 is installed indoors. The remote control apparatus 300 includes an operating unit such as a switch to be operated by a user and a display unit which displays information such as a state of the heat pump system 1.

In the following description, outlet temperature detected by the outlet temperature sensor 12 will be denoted as Thw [°C], target outlet temperature will be denoted as TP [°C], and outside air temperature detected by the outside air temperature sensor 9 will be denoted as Ta [°C]. The target outlet temperature TP is a target value of the outlet temperature Thw. The target outlet temperature TP may be a value set by the user by operating the remote control apparatus 300. The target outlet temperature TP may be a value set by the first controller 100 or the second controller 200. The first controller 100 or the second controller 200 may set the target outlet temperature TP based on a state of the refrigerant circuit, an amount of stored heat in the heat storage tank 11, target room temperature set by the user by operating the remote control apparatus 300, or the like.

In order to more accurately detect the outside air temperature Ta, the first controller 100 may use an average value of a plurality of values detected by the outside air temperature sensor 9 as the outside air temperature Ta. For example, the first controller 100 may use an average value of 10 values of the detected temperature of the outside air temperature sensor 9 sampled at 1-second intervals as the outside air temperature Ta.

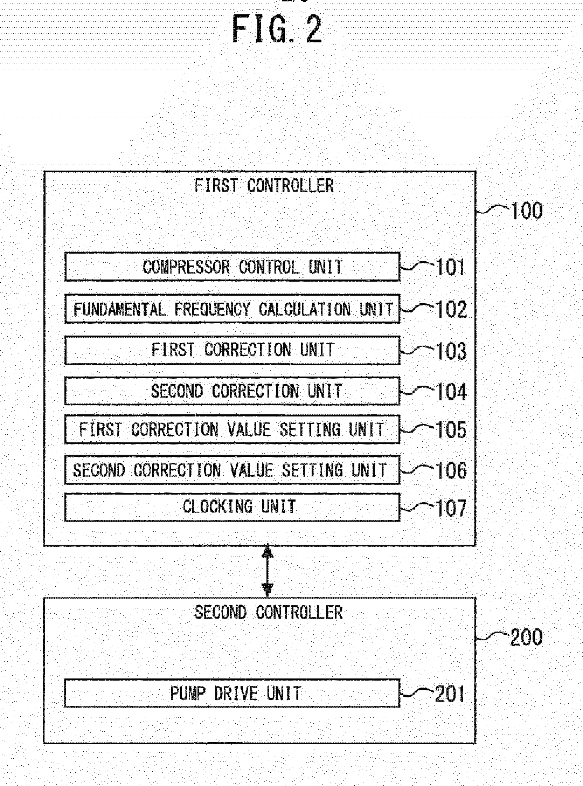

Fig. 2 is a functional block diagram of the heat pump system 1 according to the first embodiment. As shown in Fig. 2, the first controller 100 includes a compressor control unit 101, a fundamental frequency calculation unit 102, a first correction unit 103, a second correction unit 104, a first correction value setting unit 105, a second correction value setting unit 106, and a clocking unit 107. The second controller 200 includes a pump drive unit 201.

The compressor control unit 101 controls operations of the compressor 3. An operating speed of the compressor 3 is variable. The compressor control unit 101 is capable of varying the operating speed of the compressor 3 by varying an operating frequency of an electric motor included in the compressor 3 by inverter control. The higher the operating frequency of the compressor 3, the higher the operating speed of the compressor 3. The higher the operating speed of the compressor 3, the higher a circulation flow rate of the refrigerant, and the higher an amount of heat [kW] per unit time supplied by the refrigerant to the heating heat exchanger 4. In the following description, the amount of heat per unit time supplied by the refrigerant to the heating heat exchanger 4 will be referred to as a "supplied heat amount".

The higher the outside air temperature Ta, the larger an amount of heat absorbed by the refrigerant from outside air in the evaporator 6. Supposing that the operating frequency of the compressor 3 is set constant, the higher the outside air temperature Ta, the larger the supplied heat amount.

The compressor control unit 101 controls the operating frequency of the compressor 3 in accordance with a sum of a fundamental frequency and a correction frequency. The fundamental frequency is calculated by the fundamental frequency calculation unit 102. The correction frequency is calculated by the first correction unit 103, the second correction unit 104, the first correction value setting unit 105, and the second correction value setting unit 106. The clocking unit 107 measures time.

The pump drive unit 201 controls operations of the circulation pump 10. The pump drive unit 201 desirably drives the circulation pump 10 so that a flow rate of the heating medium passing through the heating heat exchanger 4 is temporally constant. By making the flow rate of the heating medium passing through the heating heat exchanger 4 temporally constant, efficiency of the heat pump system 1 becomes favorable. When supplying the heating medium heated by the heating heat exchanger 4 to the indoor-heating appliance 16, favorable indoor heating characteristics can be achieved by making the flow rate of the heating medium circulated to the indoor-heating appliance 16 temporally constant.

In the following description, K (Kelvin) will be used as a unit of a temperature difference in order to facilitate understanding of a distinction between high and low temperatures [°C] and large and small temperature differences. A temperature difference obtained by subtracting current outlet temperature Thw from the target outlet temperature TP is denoted by ΔThw [K]. In other words, the temperature difference ΔThw is defined by the following expression.

$$\Delta Thw = TP - Thw \dots (1)$$

The fundamental frequency calculation unit 102 calculates the fundamental frequency in accordance with the temperature difference ΔThw and the current outside air temperature Ta. An example of a map representing a relationship among the temperature difference ΔThw, the outside air temperature Ta, and the fundamental frequency [Hz] is shown in Table 1.

[Table 1]

Table 1

| Outside air temperature Ta / ΔThw | Ta ≤ -10°C | -7°C | 2°C | 7°C | 12°C | 25°C | 35°C ≤ Ta |
|---|---|---|---|---|---|---|---|
| ΔThw ≤ 0 K | 45 Hz | 45 Hz | 35 Hz | 35 Hz | 35 Hz | 35 Hz | 35 Hz |
| 10 K | 71 Hz | 63 Hz | 48 Hz | 46 Hz | 44 Hz | 39 Hz | 35 Hz |
| 15 K | 84 Hz | 74 Hz | 57 Hz | 52 Hz | 46 Hz | 43 Hz | 35 Hz |
| 20 K | 98 Hz | 98 Hz | 86 Hz | 76 Hz | 69 Hz | 52 Hz | 35 Hz |
| ΔThw ≥ 50 K | 98 Hz | 98 Hz | 96 Hz | 86 Hz | 78 Hz | 54 Hz | 35 Hz |

In the present embodiment, the fundamental frequency calculation unit 102 can calculate the fundamental frequency in accordance with the temperature difference ΔThw and the current outside air temperature Ta based on the map shown in Table 1. Moreover, in a case where one of or both of the temperature difference ΔThw and the outside air temperature Ta do not correspond to values described in the map shown in Table 1, the fundamental frequency is calculated by linearly interpolating between two points determined from the values described in the map shown in Table 1. In the present embodiment, an upper limit frequency of the compressor 3 is 98 Hz and a lower limit frequency of the compressor 3 is 35 Hz.

During operation of the compressor 3, in each control period, the fundamental frequency is updated to a value calculated by the fundamental frequency calculation unit 102. During operation of the compressor 3, the fundamental frequency varies sequentially in accordance with a variation in the temperature difference ΔThw or a variation in the outside air temperature Ta. When the fundamental frequency varies during operation of the compressor 3, the operating frequency of the compressor 3 varies and the supplied heat amount also varies.

As indicated by the map shown in Table 1, in the present embodiment, the fundamental frequency when the temperature difference ΔThw is small is lower than the fundamental frequency when the temperature difference ΔThw is large. As a result, the following effect is obtained. Immediately after starting the compressor 3, the temperature difference ΔThw is large since the outlet temperature Thw is low. When the temperature difference ΔThw is large, since the fundamental frequency is increased as compared to when the temperature difference ΔThw is small, the supplied heat amount increases. As a result, the outlet temperature Thw can be increased at a higher rate. Subsequently, as the outlet temperature Thw rises and approaches the target outlet temperature TP, the temperature difference ΔThw decreases. As the temperature difference ΔThw decreases, the supplied heat amount is reduced since the fundamental frequency decreases. As a result, an overshoot of the outlet temperature Thw with respect to the target outlet temperature TP can be reliably prevented. Since an overshoot of the outlet temperature Thw can be reliably prevented, safety of the indoor-heating appliance 16 can be further improved.

In order to obtain the effect described above, the fundamental frequency calculation unit 102 may calculate the fundamental frequency such that, at least when the outside air temperature Ta is within a specific range, the fundamental frequency when the temperature difference $\Delta$Thw is small is lower than the fundamental frequency when the temperature difference $\Delta$Thw is large. When the outside air temperature Ta is not within the specific range, the fundamental frequency calculation unit 102 may set a constant fundamental frequency. As indicated by the map shown in Table I, when the outside air temperature Ta is equal to or higher than 35°C, the fundamental frequency is constant at 35 Hz regardless of the temperature difference $\Delta$Thw. In the present embodiment, the fundamental frequency calculation unit 102 calculates the fundamental frequency such that the fundamental frequency when the temperature difference $\Delta$Thw is small is lower than the fundamental frequency when the temperature difference $\Delta$Thw is large only when the outside air temperature Ta is within a specific range (a range of lower than 35°C). In the present embodiment, when the outside air temperature Ta is equal to or higher than 35°C, the fundamental frequency calculation unit 102 sets the fundamental frequency constant regardless of the temperature difference $\Delta$Thw. The fundamental frequency calculation unit 102 is not limited to such a configuration and may calculate the fundamental frequency such that the fundamental frequency when the temperature difference $\Delta$Thw is small is lower than the fundamental frequency when the temperature difference $\Delta$Thw is large regardless of the outside air temperature Ta.

As indicated by the map shown in Table 1, in the present embodiment, the fundamental frequency when the outside air temperature Ta is high is lower than the fundamental frequency when the outside air temperature Ta is low. As a result, the following effect is obtained. As described earlier, supposing that the operating frequency of the compressor 3 is set constant, the higher the outside air temperature Ta, the larger the supplied heat amount. In the present embodiment, when the outside air temperature Ta is high, the supplied heat amount can be reliably prevented from increasing more than necessary by reducing the fundamental frequency. As a result, an overshoot of the outlet temperature Thw with respect to the target outlet temperature TP can be reliably prevented. Since an overshoot of the outlet temperature Thw can be reliably prevented, safety of the indoor-heating appliance 16 can be further improved. Conversely, when the outside air temperature Ta is low, a shortage of the supplied heat amount can be reliably prevented by increasing the fundamental frequency. As a result, an undershoot of the outlet temperature Thw with respect to the target outlet temperature TP can be reliably prevented. When performing indoor heating with the indoor-heating appliance 16 or when accumulating heat in the heat storage tank 11, the compressor 3 may be operated for a long period of time. Therefore, during operation of the compressor 3, the outside air temperature Ta may vary significantly due to a variation in sunshine or weather. According to the present embodiment, even when the outside air temperature Ta varies during the operation of the compressor 3, by appropriately varying an operating frequency of the compressor 3 in accordance with a variation in the outside air temperature Ta, an overshoot and an undershoot of the outlet temperature Thw can be reliably prevented.

In order to obtain the effect described above, the fundamental frequency calculation unit 102 may calculate the fundamental frequency such that, at least when the temperature difference $\Delta$Thw is within a specific range, the fundamental frequency when the outside air temperature Ta is high is lower than the fundamental frequency when the outside air temperature Ta is low. For example, when the temperature difference $\Delta$Thw is large, the fundamental frequency calculation unit 102 may set the fundamental frequency constant to a value equivalent to the upper limit frequency regardless of the outside air temperature Ta. Alternatively, when the temperature difference $\Delta$Thw is sufficiently small, the fundamental frequency calculation unit 102 may set the fundamental frequency constant to a value equivalent to the lower limit frequency regardless of the outside air temperature Ta.

The compressor control unit 101 controls the operating frequency of the compressor 3 in accordance with a sum of the fundamental frequency [Hz] and the correction frequency [Hz]. The correction frequency at the start of operation (in other words, an initial value of the correction frequency) of the compressor 3 is 0 Hz. The first correction unit 103 adds a first correction value to the correction frequency. The first correction value is a positive value. The second correction unit 104 adds a second correction value to the correction frequency. The second correction value is a negative value. The correction frequency is a value obtained by adding up all first correction values and second correction values having been added after the start of the operation of the compressor 3. The first correction value and the second correction value are set to values that are small enough to prevent the refrigerant circuit from becoming unstable when the operating frequency of the compressor 3 is corrected by the values.

When the sum of the fundamental frequency and the correction frequency is a value between the upper limit frequency and the lower limit frequency, the compressor control unit 101 sets the operating frequency of the compressor 3 to a value equivalent to the sum of the fundamental frequency and the correction frequency. When the sum of the fundamental frequency and the correction frequency is equal to or higher than the upper limit frequency, the compressor control unit 101 sets the operating frequency of the compressor 3 to a value equivalent to the upper limit frequency. When the sum of the fundamental frequency and the correction frequency is equal to or lower than the lower limit frequency, the compressor control unit 101 sets the operating frequency of the compressor 3 to a value equivalent to the lower limit frequency.

Moreover, until a certain period of time (for example, around three to five minutes) elapses after the start of operation of the compressor 3, the compressor control unit 101 may hold the operating frequency of the compressor 3 to a constant value instead of varying the operating frequency of the compressor 3. Accordingly, the state of the refrigerant circuit can be stabilized sooner.

The first correction unit 103 adds the first correction value to the correction frequency when the temperature difference ΔThw is larger than a positive first reference value and a temporal variation in the outlet temperature Thw is smaller than a reference. The temperature difference ΔThw being larger than the positive first reference value will be hereinafter referred to as a "condition 1". A temporal variation of the outlet temperature Thw being smaller than a reference will be hereinafter referred to as a "condition 2". The first correction unit 103 adds the first correction value to the correction frequency when both condition 1 and condition 2 are satisfied. When any one of or both of condition 1 and condition 2 are not satisfied, the first correction unit 103 does not add the first correction value to the correction frequency. Since the addition of the first correction value to the correction frequency increases the correction frequency, the operating frequency of the compressor 3 also increases.

When the outlet temperature Thw appears to become stable before the temperature difference ΔThw becomes sufficiently small, the operating frequency of the compressor 3 can be increased by having the first correction unit 103 add the positive first correction value to the correction frequency. As a result, the temperature difference ΔThw can be reduced and the outlet temperature Thw can be brought closer to the target outlet temperature TP.

In the present embodiment, the positive first reference value of condition 1 is set to 2 K. In other words, condition 1 according to the present embodiment is expressed by the following expression.

$$2\,K < \Delta Thw \ldots (2)$$

Condition 2 according to the present embodiment is expressed by the following expression.

$$-2\,K < Thw\,(n) - Thw\,(n - 1) < 2\,K \ldots (3),$$

where Thw (n) denotes the current outlet temperature Thw, and Thw (n - 1) denotes the outlet temperature Thw at a certain period of time in advance (for example, 45 seconds in advance) of the current time point.

In the present embodiment, when expression (3) provided above is satisfied or, in other words, when an absolute value of a difference between the current outlet temperature Thw (n) and the outlet temperature Thw (n - 1) at a certain period of time in advance is smaller than 2 K, the temporal variation of the outlet temperature Thw is determined to be smaller than a reference. When expression (3) provided above is not satisfied, it is determined that the temporal variation of the outlet temperature Thw is not smaller than a reference or, in other words, condition 2 is not satisfied.

When condition 2 is not satisfied or, in other words, when the outlet temperature Thw does not seem to be close to becoming stable, the first correction value is not added even when condition 1 is satisfied. For example, when a rate of increase of the outlet temperature Thw is sufficiently high, since condition 2 is not satisfied, the first correction value is not added. When the rate of increase of the outlet temperature Thw is sufficiently high, a variation of the fundamental frequency calculated by the fundamental frequency calculation unit 102 is relatively large. A further variation in the correction frequency when the variation in the fundamental frequency is relatively large may possibly make the states of the compressor 3 and the refrigerant circuit unstable. When the states of the compressor 3 and the refrigerant circuit become unstable, efficiency of the heat pump system 1 declines. According to the present embodiment, since the first correction value is added only when condition 2 is satisfied, the fundamental frequency and the correction frequency can be prevented from being changed at the same time. As a result, the states of the compressor 3 and the refrigerant circuit can be reliably prevented from becoming unstable. A decline in the efficiency of the heat pump system 1 can also be reliably prevented.

In the present embodiment, when a difference between the target outlet temperature TP and the outlet temperature Thw is equal to or smaller than 2 K or, in other words, when 2 K ≥ ΔThw, a determination can be made that the outlet temperature Thw is already sufficiently close to the target outlet temperature TP. In other words, when condition 1 described above is not satisfied, there is no need to further increase the outlet temperature Thw and to add the first correction value to the correction frequency. However, the first reference value of condition 1 may be set to a value smaller than 2 K.

The second correction unit 104 adds the second correction value to the correction frequency when a state where the outlet temperature Thw is higher than the target outlet temperature TP continues for a certain period of time (for example, 30 seconds) or longer. A condition of the second correction unit 104 adding the second correction value to the correction frequency will be hereinafter referred to as "condition 3". In the present embodiment, the following expression being continuously satisfied for a certain period of time or longer corresponds to condition 3.

$$\Delta Thw < 0\ K \dots (4)$$

When condition 3 is satisfied or, in other words, when the outlet temperature Thw appears to become stable in a state of being higher than the target outlet temperature TP, the operating frequency of the compressor 3 can be reduced by having the second correction unit 104 add the negative second correction value to the correction frequency. As a result, the outlet temperature Thw can be lowered and an overshoot of the outlet temperature Thw with respect to the target outlet temperature TP can be reliably prevented.

Moreover, in place of the condition described above, the second correction unit 104 may add the second correction value to the correction frequency when a state where the outlet temperature Thw is higher beyond a permissible limit than the target outlet temperature TP continues for a certain period of time (for example, 30 seconds) or longer. For example, when a state of the outlet temperature Thw being higher than the target outlet temperature TP by up to 1 K is permissible, the permissible limit described above is 1 K. In this case, the following expression being satisfied for a certain period of time or longer corresponds to condition 3.

$$\Delta Thw < -1\ K \dots (5)$$

When the temperature difference $\Delta Thw$ is larger than a positive second reference value, the first correction value setting unit 105 sets the first correction value as follows. The first correction value when the outside air temperature Ta is high is smaller than the first correction value when the outside air temperature Ta is low. The second reference value is a value larger than the first reference value. The second reference value is, for example, 5 K. When the temperature difference $\Delta Thw$ is smaller than a negative reference value, the second correction value setting unit 106 sets the second correction value as follows. An absolute value of the second correction value when the outside air temperature Ta is high is smaller than the absolute value of the second correction value when the outside air temperature Ta is low. The negative reference value is, for example, -5 K. An example of a map representing a relationship among the outside air temperature Ta, the first correction value, and the second correction value in these cases is shown in Table 2.

[Table 2]

Table 2

| Outside air temperature Ta | Ta ≤ -10°C | -7°C | 2°C | 7°C | 12°C | 25°C | 35°C ≤ Ta |
|---|---|---|---|---|---|---|---|
| First correction value | 3 Hz | 3 Hz | 2 Hz | 2 Hz | 2 Hz | 1 Hz | 1 Hz |
| Second correction value | -3 Hz | -3 Hz | -2 Hz | -2 Hz | -2 Hz | -1 Hz | -1 Hz |

In the present embodiment, when the temperature difference $\Delta Thw$ satisfies $\Delta Thw \geq 5\ K$, the first correction value setting unit 105 sets the first correction value based on the map shown in Table 2. When the temperature difference $\Delta Thw$ satisfies $\Delta Thw \leq -5\ K$, the second correction value setting unit 106 sets the second correction value based on the map shown in Table 2. Moreover, in a case where the outside air temperature Ta does not correspond to values described in the map shown in Table 2, the first correction value or the second correction value is calculated by linearly interpolating between two points determined from the values described in the map shown in Table 2.

When the temperature difference $\Delta Thw$ is not larger than the second reference value described above, the first correction value setting unit 105 sets the first correction value constant regardless of the outside air temperature Ta. When the temperature difference $\Delta Thw$ is not smaller than the negative reference value described above, the second correction value setting unit 106 sets the second correction value constant regardless of the outside air temperature Ta. An example of a map representing a relationship among the outside air temperature Ta, the first correction value, and the second correction value in these cases is shown in Table 3.

[Table 3]

Table 3

| Outside air temperature Ta | Ta ≤ -10°C | -7°C | 2°C | 7°C | 12°C | 25°C | 35°C ≤ Ta |
|---|---|---|---|---|---|---|---|
| First correction value | 1 Hz | 1 Hz | 1 Hz | 1 Hz | 1 Hz | 1 Hz | 1 Hz |
| Second correction value | -1 Hz | -1 Hz | -1 Hz | -1 Hz | -1 Hz | -1 Hz | -1 Hz |

In the present embodiment, when the temperature difference $\Delta$Thw satisfies 2 K < $\Delta$Thw < 5 K, the first correction value setting unit 105 sets the first correction value to 1 Hz regardless of the outside air temperature Ta as indicated in the map shown in Table 3. When the temperature difference $\Delta$Thw satisfies -5 K < $\Delta$Thw < 0 K, the second correction value setting unit 106 sets the second correction value to -1 Hz regardless of the outside air temperature Ta as indicated in the map shown in Table 3.

According to the present embodiment, by having the first correction value setting unit 105 set the first correction value based on the map shown in Table 2 so that the first correction value when the outside air temperature Ta is high is smaller than the first correction value when the outside air temperature Ta is low, the following effect is obtained. When the outside air temperature Ta is high or, in other words, when the supplied heat amount is likely to increase, the first correction value can be reliably prevented from becoming excessively large. As a result, an overshoot of the outlet temperature Thw with respect to the target outlet temperature TP can be reliably prevented. In addition, when the outside air temperature Ta is low or, in other words, when the supplied heat amount is likely to decrease, the first correction value can be reliably prevented from becoming insufficient. As a result, an undershoot of the outlet temperature Thw with respect to the target outlet temperature TP can be reliably prevented.

In order to obtain the effect described above, the first correction value setting unit 105 may set the first correction value such that, at least when the temperature difference $\Delta$Thw is larger than the second reference value described above, the first correction value when the outside air temperature Ta is high is smaller than the first correction value when the outside air temperature Ta is low. When the temperature difference $\Delta$Thw is not larger than the second reference value described above, since the outlet temperature Thw is in a state of being relatively close to the target outlet temperature TP, the outlet temperature Thw can be swiftly brought close to the target outlet temperature TP even when the first correction value is constant regardless of the outside air temperature Ta. However, it is needless to say that the first correction value setting unit 105 may set the first correction value such that the first correction value when the outside air temperature Ta is high is smaller than the first correction value when the outside air temperature Ta is low regardless of the temperature difference $\Delta$Thw.

In the present embodiment, by having the second correction value setting unit 106 set the second correction value based on the map shown in Table 2 so that the absolute value of the second correction value when the outside air temperature Ta is high is smaller than the absolute value of the second correction value when the outside air temperature Ta is low, the following effect is obtained. When the outside air temperature Ta is high, the second correction value can be reliably prevented from becoming excessively large. When the outside air temperature Ta is low, the second correction value can be reliably prevented from becoming insufficient.

In order to obtain the effect described above, the second correction value setting unit 106 may set the second correction value such that, at least when the temperature difference $\Delta$Thw is smaller than the negative reference value described above, the absolute value of the second correction value when the outside air temperature Ta is high is smaller than the absolute value of the second correction value when the outside air temperature Ta is low. When the temperature difference $\Delta$Thw is not smaller than the negative reference value described above, since the outlet temperature Thw is in a state of being relatively close to the target outlet temperature TP, the outlet temperature Thw can be swiftly brought close to the target outlet temperature TP even when the second correction value is constant regardless of the outside air temperature Ta. However, it is needless to say that the second correction value setting unit 106 may set the second correction value such that the absolute value of the second correction value when the outside air temperature Ta is high is smaller than the absolute value of the second correction value when the outside air temperature Ta is low regardless of the temperature difference $\Delta$Thw.

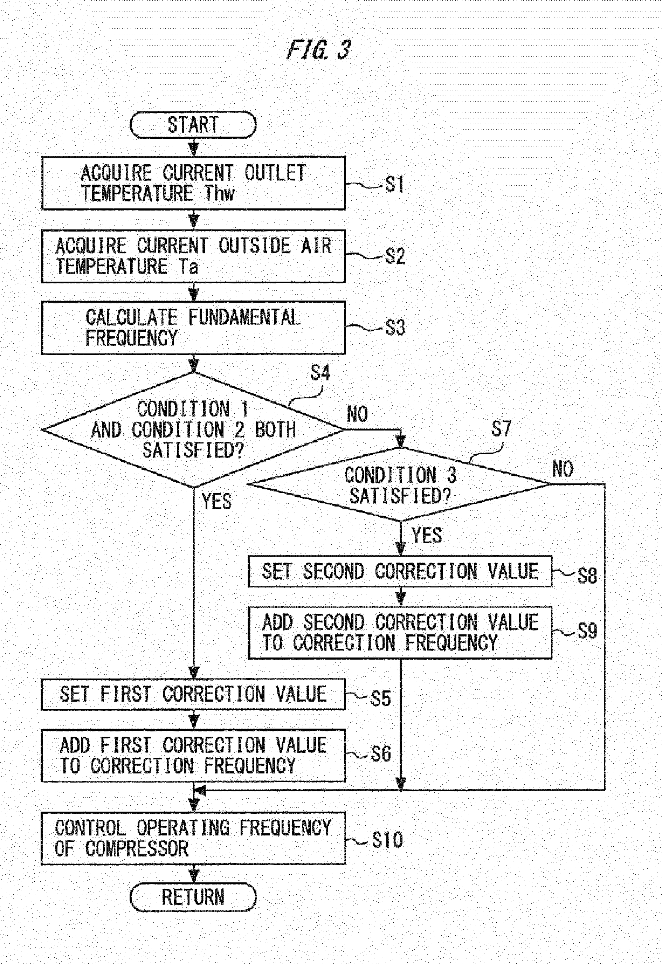

Fig. 3 is a flow chart of a routine executed by the first controller 100 of the heat pump system 1 according to the first embodiment. During the operation of the compressor 3, the first controller 100 repetitively executes the routine shown in Fig. 3 in each prescribed control period (for example, every 45 seconds). In step S1 shown in Fig. 3, the first controller 1 00 acquires the current outlet temperature Thw detected by the outlet temperature sensor 12. In step S2, the first controller 100 acquires the current outside air temperature Ta detected by the outside air temperature sensor 9. In step S3, the fundamental frequency calculation unit 102 calculates the fundamental frequency in accordance with the temperature difference $\Delta$Thw and the current outside air temperature Ta based on the map shown in Table 1.

In step S4, the first correction unit 103 determines whether condition 1 and condition 2 are satisfied. For example, when the temperature difference $\Delta$Thw satisfies expression (2) described earlier, the first correction unit 103 determines that condition 1 is satisfied, but if not, the first correction unit 103 determines that condition 1 is not satisfied. For example, when the current outlet temperature Thw (n) and the outlet temperature Thw (n - 1) acquired in an immediately previous control period satisfy expression (3) described earlier, the first correction unit 103 determines that condition 2 is satisfied, but if not, the first correction unit 103 determines that condition 2 is not satisfied.

When it is determined that both condition 1 and condition 2 are satisfied, a transition is made from step S4 to step S5. In step S5, in accordance with a value of the temperature difference $\Delta$Thw, the first correction value setting unit 105 sets the first correction value based on the map shown in Table 2 or Table 3. A transition is made from step S5 to step S6. In step S6, the first correction unit 103 adds the set first correction value to the correction frequency. A transition is made from step S6 to step S10.

When it is determined that any one of or both of condition 1 and condition 2 are not satisfied, a transition is made from step S4 to step S7. In step S7, the second correction unit 104 determines whether condition 3 is satisfied. When expression (4) described earlier is continuously satisfied from a certain period of time ago (for example, 30 seconds ago) to the present, the second correction unit 104 determines that condition 3 is satisfied, but if not, the second correction unit 104 determines that condition 3 is not satisfied.

When it is determined that condition 3 is satisfied, a transition is made from step S7 to step S8. In step S8, in accordance with a value of the temperature difference $\Delta$Thw, the second correction value setting unit 106 sets the second correction value based on the map shown in Table 2 or Table 3. A transition is made from step S8 to step S9. In step S9, the second correction unit 104 adds the set second correction value to the correction frequency. A transition is made from step S9 to step S10. When it is determined that condition 3 is not satisfied, a transition is made from step S7 to step S10.

In step S10, in accordance with a sum of the fundamental frequency and the correction frequency, the compressor control unit 101 controls the operating frequency of the compressor 3 as follows. When the sum of the fundamental frequency and the correction frequency is a value between the upper limit frequency and the lower limit frequency, the operating frequency of the compressor 3 is set to a value equivalent to the sum of the fundamental frequency and the correction frequency. When the sum of the fundamental frequency and the correction frequency is equal to or higher than the upper limit frequency, the operating frequency of the compressor 3 is set to a value equivalent to the upper limit frequency. When the sum of the fundamental frequency and the correction frequency is equal to or lower than the lower limit frequency, the operating frequency of the compressor 3 is set to a value equivalent to the lower limit frequency. After step S10, the routine is ended.

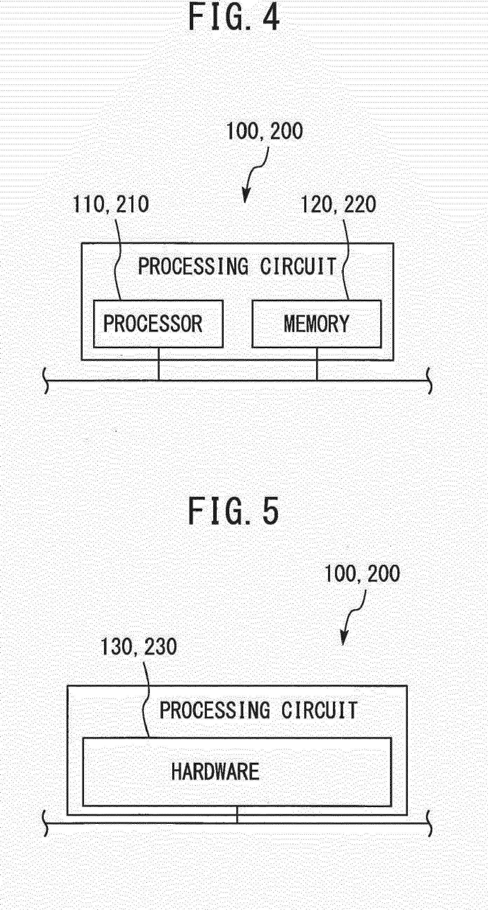

Fig. 4 is a diagram showing an example of a hardware configuration of the first controller 100 or the second controller 200 included in the heat pump system 1 according to the first embodiment. Each function of the first controller 100 is realized by a processing circuit. Each function of the second controller 200 is realized by a processing circuit. In the example shown in Fig. 4, the processing circuit of the first controller 100 includes at least one processor 110 and at least one memory 120. The processing circuit of the second controller 200 includes at least one processor 210 and at least one memory 220.

When the processing circuit includes the at least one processor 110 or 210 and the at least one memory 120 or 220, each function of the first controller 100 or the second controller 200 is realized by software, firmware, or a combination of software and firmware. At least one of the software and the firmware is described as a program. At least one of the software and the firmware is stored in the at least one memory 120 or 220. The at least one processor 110 or 210 realizes each function of the first controller 100 or the second controller 200 by reading and executing a program stored in the at least one memory 120 or 220. The at least one processor 110 or 210 is referred to as a CPU (Central Processing Unit), a processing unit, an arithmetic unit, a microprocessor, a microcomputer, or a DSP (Digital Signal Processor). For example, the at least one memory 120 or 220 is a nonvolatile or volatile semiconductor memory such as a RAM (Random Access Memory), a ROM (Read Only Memory), a flash memory, an EPROM (Erasable Programmable Read Only Memory), and an EEPROM (Electrically Erasable Programmable Read-Only Memory), a magnetic disk, a flexible disk, an optical disk, a compact disc, a mini disc, a DVD (Digital Versatile Disc), or the like.

Fig. 5 is a diagram showing another example of the hardware configuration of the first controller 100 or the second controller 200 included in the heat pump system 1 according to the first embodiment. In the example shown in Fig. 5, the processing circuit of the first controller 100 includes at least one piece of dedicated hardware 130. The processing circuit of the second controller 200 includes at least one piece of dedicated hardware 230.

When the processing circuit includes the at least one piece of dedicated hardware 130 or 230, the processing circuit is, for example, a single circuit, a composite circuit, a programmed processor, a parallel-programmed processor, an ASIC (Application Specific Integrated Circuit), an FPGA (Field-Programmable Gate Array), or a combination thereof. Functions of the units of the first controller 100 or the second controller 200 may be respectively realized by the processing circuit. In addition, functions of the units of the first controller 100 or the second controller 200 may be collectively realized by the processing circuit.

In addition, among the respective functions of the first controller 100, a part may be realized by the dedicated hardware 130 and another part may be realized by software or firmware. In this manner, the processing circuit realizes the respective functions of the first controller 100 by the hardware 130, software, firmware, or a combination thereof.

Furthermore, among the respective functions of the second controller 200, a part may be realized by the dedicated hardware 230 and another part may be realized by software or firmware. In this manner, the processing circuit realizes the respective functions of the second controller 200 by the hardware 230, software, firmware, or a combination thereof.

In the present embodiment, the first controller 100 and the second controller 200 cooperate with each other to control the operations of the heat pump system 1. Such a configuration is not restrictive and a configuration may be adopted in which operations of the heat pump system 1 is controlled by a single controller.

Second embodiment

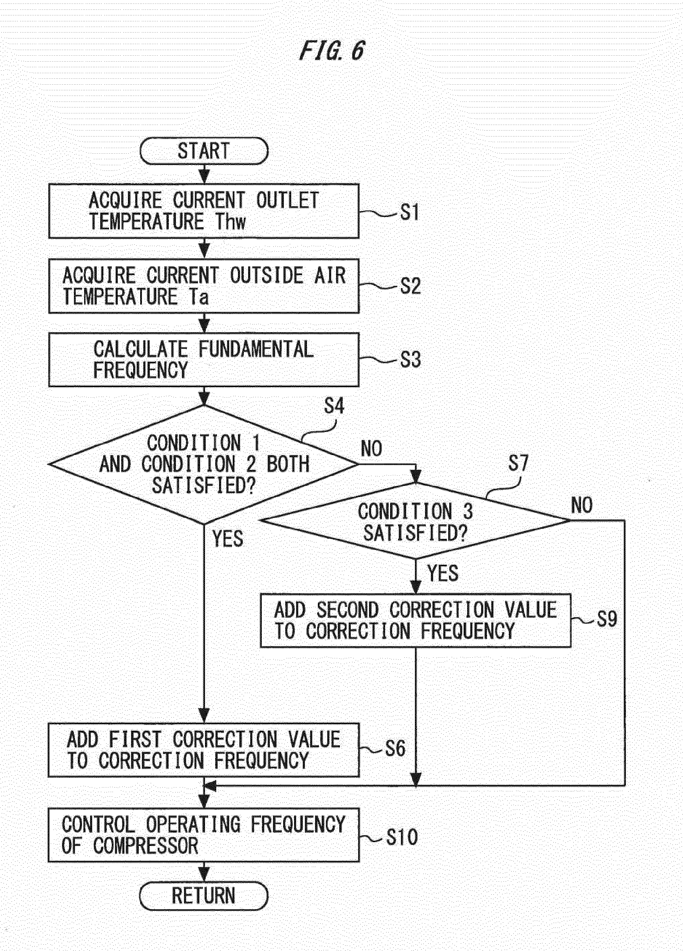

Next, while a second embodiment will be described with reference to Fig. 6, the description will focus on differences from the first embodiment described above and descriptions of same or equivalent portions will be simplified or omitted.

A configuration diagram of the heat pump system 1 according to the present second embodiment is the same as Fig. 1 and therefore will be omitted. A functional block diagram of the heat pump system 1 according to the present second embodiment is the same as Fig. 2 with the exception of the first controller 1 00 not including the first correction value setting unit 105 and the second correction value setting unit 106 and therefore will be omitted.

In the present second embodiment, the first correction unit 103 adds a first correction value independent of the outside air temperature Ta to the correction frequency. The first correction value according to the present second embodiment is independent of the outside air temperature Ta and the temperature difference ΔThw and is set to a constant value. The first correction value according to the present second embodiment is set to a relatively small value (for example, 1 Hz or 2 Hz).

In the present second embodiment, the second correction unit 104 adds a second correction value independent of the outside air temperature Ta to the correction frequency. The second correction value according to the present second embodiment is independent of the outside air temperature Ta and the temperature difference ΔThw and is set to a constant value. The second correction value according to the present second embodiment is set to a relatively small value (for example, -1 Hz or -2 Hz).

Fig. 6 is a flow chart of a routine executed by the first controller 100 of the heat pump system 1 according to the second embodiment. The flow chart shown in Fig. 6 is the same as the flow chart shown in Fig. 3 according to the first embodiment with the exception of the absence of step S5 and step S8. In the routine executed by the first controller 100 in the present second embodiment, only differences from the first embodiment will be described below.

When it is determined in step S4 that both condition 1 and condition 2 are satisfied, a transition is made to step S6. In step S6, the first correction unit 103 adds a prescribed first correction value independent of the outside air temperature Ta and the temperature difference ΔThw to the correction frequency. When it is determined in step S7 that condition 3 is satisfied, a transition is made to step S9. In step S9, the second correction unit 104 adds a prescribed second correction value independent of the outside air temperature Ta and the temperature difference ΔThw to the correction frequency.

According to the present second embodiment, by setting the first correction value and the second correction value to relatively small constant values independent of the outside air temperature Ta and the temperature difference ΔThw, a stable operating state of the refrigerant circuit can be obtained.

[Reference Signs List]

1     heat pump system
3     compressor
4     heating heat exchanger
5     decompressor
6     evaporator
7     air blower
7a    fan
7b    motor
8     refrigerant piping
9     outside air temperature sensor
10    circulation pump
11    heat storage tank

12    outlet temperature sensor
13    inlet temperature sensor
14    first pipe
15    second pipe
16    indoor-heating appliance
17    third pipe
18    fourth pipe
100   first controller
101   compressor control unit
102   fundamental frequency calculation unit
103   first correction unit
104   second correction unit
105   first correction value setting unit
106   second correction value setting unit
107   clocking unit
110   processor
120   memory
130   hardware
200   second controller
201   pump drive unit
210   processor
220   memory
230   hardware
300   remote control apparatus

**Claims**

1.  A heat pump system (1), comprising:

    a compressor (3) configured to compress a refrigerant;
    a heating heat exchanger (4) configured to exchange heat between the refrigerant compressed by the compressor (3) and a heating medium;
    a decompressor (5) configured to decompress the refrigerant;
    an evaporator (6) configured to exchange heat between the refrigerant decompressed by the decompressor (5) and outside air;
    outside air temperature detection means (9) configured to detect outside air temperature;
    outlet temperature detection means (12) configured to detect outlet temperature, the outlet temperature being temperature of the heating medium flowing out from the heating heat exchanger (4);
    compressor control means (101) configured to control an operating frequency of the compressor (3);
    **characterized in that** the compressor control means (101) is configured to control an operating frequency of the compressor (3) in accordance with a sum of a fundamental frequency and a correction frequency; and the heat pump system further comprises
    fundamental frequency calculation means (102) configured to calculate the fundamental frequency in accordance with a temperature difference obtained by subtracting current outlet temperature from target outlet temperature and in accordance with current outside air temperature; and
    first correction means (103) configured to add a positive first correction value to the correction frequency when the temperature difference is larger than a positive first reference value and a temporal variation in the outlet temperature is smaller than a reference.

2.  The heat pump system (1) according to claim 1, wherein the fundamental frequency calculation means (102) is configured to calculate the fundamental frequency such that, at least when the outside air temperature is within a specific range, the fundamental frequency when the temperature difference is small is lower than the fundamental frequency when the temperature difference is large.

3.  The heat pump system (1) according to claim 1 or 2, wherein the fundamental frequency calculation means (102) is configured to calculate the fundamental frequency such that, at least when the temperature difference is within a specific range, the fundamental frequency when the outside air temperature is high is lower than the fundamental frequency when the outside air temperature is low.

4. The heat pump system (1) according to any one of claims 1 to 3, further comprising first correction value setting means (105) configured to set the first correction value, wherein
the first correction value setting means (105) is configured to set the first correction value such that, at least when the temperature difference is larger than a positive second reference value, the first correction value when the outside air temperature is high is smaller than the first correction value when the outside air temperature is low.

5. The heat pump system (1) according to any one of claims 1 to 3, wherein the first correction value is constant regardless of the outside air temperature.

6. The heat pump system (1) according to any one of claims 1 to 5, further comprising second correction means (104) configured to add a negative second correction value to the correction frequency when a state where the outlet temperature is higher than the target outlet temperature or a state where the outlet temperature is higher beyond a permissible limit than the target outlet temperature, has continued for a certain period of time.

7. The heat pump system (1) according to claim 6, further comprising second correction value setting means (106) configured to set the second correction value, wherein
the second correction value setting means (106) is configured to set the second correction value such that, at least when the temperature difference is smaller than a negative reference value, an absolute value of the second correction value when the outside air temperature is high is smaller than the absolute value of the second correction value when the outside air temperature is low.

8. The heat pump system (1) according to claim 6, wherein the second correction value is constant regardless of the outside air temperature.

9. The heat pump system (1) according to any one of claims 1 to 8, further comprising:

   a pump (10) configured to cause the heating medium to flow to the heating heat exchanger (4); and
   pump driving means (201) configured to drive the pump (10) so that a flow rate of the heating medium passing through the heating heat exchanger (4) becomes temporally constant.

**Patentansprüche**

1. Wärmepumpensystem (1), umfassend:

   einen Kompressor (3), der konfiguriert ist, ein Kältemittel zu komprimieren;
   einen Erwärmungs-Wärmetauscher (4), der konfiguriert ist, Wärme zwischen dem von dem Kompressor (3) komprimierten Kältemittel und einem Erwärmungsmedium auszutauschen;
   einen Dekompressor (5), der konfiguriert ist, das Kältemittel zu dekomprimieren;
   einen Verdampfer (6), der konfiguriert ist, Wärme zwischen dem von dem Dekompressor (5) dekomprimierten Kältemittel und Außenluft auszutauschen;
   Außenlufttemperaturerfassungsmittel (9), die konfiguriert sind, die Außenlufttemperatur zu erfassen;
   Auslasstemperaturerfassungsmittel (12), die konfiguriert sind, die Auslasstemperatur zu erfassen, wobei die Auslasstemperatur die Temperatur des Erwärmungsmediums ist, das aus dem Erwärmungs-Wärmetauscher (4) strömt;
   Kompressorsteuerungsmittel (101), die konfiguriert sind, eine Betriebsfrequenz des Kompressors (3) zu steuern; **dadurch gekennzeichnet, dass** das Kompressorsteuerungsmittel (101) konfiguriert ist, eine Betriebsfrequenz des Kompressors (3) gemäß einer Summe einer Grundfrequenz und einer Korrekturfrequenz zu steuern; und
   das Wärmepumpensystem weiter Grundfrequenzberechnungsmittel (102) umfasst, die konfiguriert sind, die Grundfrequenz gemäß einem Temperaturunterschied, der durch Subtrahieren der aktuellen Auslasstemperatur von der Zielauslasstemperatur erhalten wird, und gemäß der aktuellen Außenlufttemperatur zu berechnen; und
   erste Korrekturmittel (103), die konfiguriert sind, der Korrekturfrequenz einen positiven ersten Korrekturwert hinzuzufügen, wenn der Temperaturunterschied größer ist als ein positiver erster Referenzwert und eine temporäre Schwankung der Auslasstemperatur kleiner ist als eine Referenz.

2. Wärmepumpensystem (1) nach Anspruch 1, wobei das Grundfrequenzberechnungsmittel (102) konfiguriert ist, die Grundfrequenz zu berechnen, sodass, zumindest wenn die Außenlufttemperatur innerhalb eines spezifischen Bereichs liegt, die Grundfrequenz, wenn der Temperaturunterschied klein ist, niedriger ist als die Grundfrequenz, wenn der Temperaturunterschied groß ist.

3. Wärmepumpensystem (1) nach Anspruch 1 oder 2, wobei das Grundfrequenzberechnungsmittel (102) konfiguriert ist, die Grundfrequenz zu berechnen, sodass, zumindest wenn der Temperaturunterschied innerhalb eines spezifischen Bereichs liegt, die Grundfrequenz, wenn die Außenlufttemperatur hoch ist, niedriger ist als die Grundfrequenz, wenn die Außenlufttemperatur niedrig ist.

4. Wärmepumpensystem (1) nach einem der Ansprüche 1 bis 3, weiter umfassend erste Korrekturwerteinstellungsmittel (105), die konfiguriert sind, den ersten Korrekturwert einzustellen, wobei
das erste Korrekturwerteinstellungsmittel (105) konfiguriert ist, den ersten Korrekturwert einzustellen, sodass, zumindest wenn der Temperaturunterschied größer ist als ein positiver zweiter Referenzwert, der erste Korrekturwert, wenn die Außenlufttemperatur hoch ist, kleiner ist als der erste Korrekturwert, wenn die Außenlufttemperatur niedrig ist.

5. Wärmepumpensystem (1) nach einem der Ansprüche 1 bis 3, wobei der erste Korrekturwert ungeachtet der Außenlufttemperatur konstant ist.

6. Wärmepumpensystem (1) nach einem der Ansprüche 1 bis 5, weiter umfassend zweite Korrekturmittel (104), die konfiguriert sind, der Korrekturfrequenz einen negativen zweiten Korrekturwert hinzuzufügen, wenn ein Zustand, in dem die Auslasstemperatur höher ist als die Zielauslasstemperatur, oder ein Zustand, in dem die Auslasstemperatur über eine zulässige Grenze hinaus höher ist als die Zielauslasstemperatur, für einen bestimmten Zeitraum fortgedauert hat.

7. Wärmepumpensystem (1) nach Anspruch 6, weiter umfassend zweite Korrekturwerteinstellungsmittel (106), die konfiguriert sind, den zweiten Korrekturwert einzustellen, wobei
das zweite Korrekturwerteinstellungsmittel (106) konfiguriert ist, den zweiten Korrekturwert einzustellen, sodass, zumindest wenn der Temperaturunterschied kleiner ist als ein negativer Referenzwert, ein Absolutwert des zweiten Korrekturwerts, wenn die Außenlufttemperatur hoch ist, kleiner ist als der Absolutwert des zweiten Korrekturwerts, wenn die Außenlufttemperatur niedrig ist.

8. Wärmepumpensystem (1) nach Anspruch 6, wobei der zweite Korrekturwert ungeachtet der Außenlufttemperatur konstant ist.

9. Wärmepumpensystem (1) nach einem der Ansprüche 1 bis 8, weiter umfassend:

eine Pumpe (10), die konfiguriert ist, zu bewirken, dass das Erwärmungsmedium zu dem Erwärmungs-Wärmetauscher (4) strömt; und
Pumpenantriebsmittel (201), die konfiguriert sind, die Pumpe (10) anzutreiben, sodass ein Durchfluss des den Erwärmungs-Wärmetauscher (4) passierenden Erwärmungsmediums temporär konstant wird.


**Revendications**

1. Système de pompe à chaleur (1), comprenant :

un compresseur (3), configuré pour comprimer un fluide frigorigène ;
un échangeur de chaleur chauffant (4), configuré pour échanger la chaleur entre le fluide frigorigène comprimé par le compresseur (3), et un milieu chauffant ;
un décompresseur (5), configuré pour décomprimer le fluide frigorigène ;
un évaporateur (6), configuré pour échanger la chaleur entre le fluide frigorigène décomprimé par le décompresseur (5) et l'air extérieur ;
des moyens de détection de la température de l'air extérieur (9), configurés pour détecter la température de l'air extérieur ;
des moyens de détection de la température en sortie (12), configurés pour détecter la température en sortie, la température en sortie étant la température du milieu chauffant circulant hors de l'échangeur de chaleur chauffant (4) ;

des moyens de commande de compresseur (101), configurés pour commander la fréquence de fonctionnement du compresseur (3) ;

**caractérisé en ce que** les moyens de commande de compresseur (101), sont configurés pour commander la fréquence de fonctionnement du compresseur (3) selon la somme d'une fréquence fondamentale et d'une fréquence de correction ; et le système de pompe à chaleur comprend en outre des moyens de calcul de la fréquence fondamentale (102), configurés pour calculer la fréquence fondamentale selon une différence de température obtenue en soustrayant la température en sortie actuelle de la température en sortie cible, et selon la température de l'air extérieur actuelle ; et

des premiers moyens de correction (103), configurés pour ajouter une première valeur de correction positive à la fréquence de correction, lorsque la différence de température est supérieure à une première valeur de référence positive, et quand une variation temporelle de la température en sortie est inférieure à une référence.

2. Système de pompe à chaleur (1) selon la revendication 1, où les moyens de calcul de la fréquence fondamentale (102), sont configurés pour calculer la fréquence fondamentale de telle sorte que, du moins lorsque la température de l'air extérieur se situe dans une plage spécifique, la fréquence fondamentale, lorsque la différence de température est petite, soit inférieure à la fréquence fondamentale lorsque la différence de température est grande.

3. Système de pompe à chaleur (1) selon la revendication 1 ou 2, où les moyens de calcul de la fréquence fondamentale (102), sont configurés pour calculer la fréquence fondamentale de telle sorte que, du moins lorsque la différence de température se situe dans une plage spécifique, la fréquence fondamentale, lorsque la température de l'air extérieur est élevée, soit inférieure à la fréquence fondamentale lorsque la température de l'air extérieur est basse.

4. Système de pompe à chaleur (1) selon l'une quelconque des revendications 1 à 3, comprenant en outre des premiers moyens de réglage d'une valeur de correction (105), configurés pour régler la première valeur de correction, où les premiers moyens de réglage d'une valeur de correction (105), sont configurés pour régler la première valeur de correction de telle sorte que, du moins lorsque la différence de température est supérieure à une seconde valeur de référence positive, la première valeur de correction, lorsque la température de l'air extérieur est élevée, soit inférieure à la première valeur de correction lorsque la température de l'air extérieur est basse.

5. Système de pompe à chaleur (1) selon l'une quelconque des revendications 1 à 3, où la première valeur de correction est constante indépendamment de la température de l'air extérieur.

6. Système de pompe à chaleur (1) selon l'une quelconque des revendications 1 à 5, comprenant en outre des seconds moyens de correction (104), configurés pour ajouter une seconde valeur de correction négative à la fréquence de correction, quand un état où la température en sortie est supérieure à la température en sortie cible, ou quand un état où la température en sortie est plus élevée au-delà d'une limite permise, que la température en sortie cible, a duré pendant une certaine période de temps.

7. Système de pompe à chaleur (1) selon la revendications 6, comprenant en outre des seconds moyens de réglage d'une valeur de correction (106), configurés pour régler la seconde valeur de correction, où les seconds moyens de réglage d'une valeur de correction (106), sont configurés pour régler la seconde valeur de correction de telle sorte que, du moins lorsque la différence de température est inférieure à une valeur de référence négative, la valeur absolue de la seconde valeur de correction, lorsque la température de l'air extérieur est élevée, soit inférieure à la valeur absolue de la seconde valeur de correction lorsque la température de l'air extérieur est basse.

8. Système de pompe à chaleur (1) selon la revendication 6, où la seconde valeur de correction est constante indépendamment de la température de l'air extérieur.

9. Système de pompe à chaleur (1) selon l'une quelconque des revendications 1 à 8, comprenant en outre :

une pompe (10) configurée pour faire circuler le milieu chauffant vers l'échangeur de chaleur chauffant (4) ; et des moyens de commande de pompe (201), configurés pour commander la pompe (10) de telle sorte que le débit du milieu chauffant passant à travers l'échangeur de chaleur chauffant (4), soit constant dans le temps.

FIG. 1

# FIG. 2

```
┌─────────────────────────────────────────────────────┐
│                  FIRST CONTROLLER                     │  ～100
│                                                       │
│   ┌───────────────────────────────────────────┐      │
│   │        COMPRESSOR CONTROL UNIT             │ ～101 │
│   ├───────────────────────────────────────────┤      │
│   │  FUNDAMENTAL FREQUENCY CALCULATION UNIT    │ ～102 │
│   ├───────────────────────────────────────────┤      │
│   │          FIRST CORRECTION UNIT             │ ～103 │
│   ├───────────────────────────────────────────┤      │
│   │         SECOND CORRECTION UNIT             │ ～104 │
│   ├───────────────────────────────────────────┤      │
│   │     FIRST CORRECTION VALUE SETTING UNIT    │ ～105 │
│   ├───────────────────────────────────────────┤      │
│   │    SECOND CORRECTION VALUE SETTING UNIT    │ ～106 │
│   ├───────────────────────────────────────────┤      │
│   │             CLOCKING UNIT                  │ ～107 │
│   └───────────────────────────────────────────┘      │
└─────────────────────────────────────────────────────┘
                          ↕
┌─────────────────────────────────────────────────────┐
│                 SECOND CONTROLLER                     │  ～200
│                                                       │
│   ┌───────────────────────────────────────────┐      │
│   │            PUMP DRIVE UNIT                 │ ～201 │
│   └───────────────────────────────────────────┘      │
└─────────────────────────────────────────────────────┘
```

*FIG. 3*

```
        ┌─────────────┐
        │   START     │
        └─────────────┘
               │
               ▼
   ┌─────────────────────────┐
   │ ACQUIRE CURRENT OUTLET  │──── S1
   │ TEMPERATURE Thw         │
   └─────────────────────────┘
               │
               ▼
   ┌─────────────────────────┐
   │ ACQUIRE CURRENT OUTSIDE │──── S2
   │ AIR TEMPERATURE Ta      │
   └─────────────────────────┘
               │
               ▼
   ┌─────────────────────────┐
   │ CALCULATE FUNDAMENTAL   │──── S3
   │ FREQUENCY               │
   └─────────────────────────┘
               │
               ▼
```

S4

CONDITION 1 AND CONDITION 2 BOTH SATISFIED?  —— NO

YES

S7

CONDITION 3 SATISFIED?  —— NO

YES

SET SECOND CORRECTION VALUE —— S8

ADD SECOND CORRECTION VALUE TO CORRECTION FREQUENCY —— S9

SET FIRST CORRECTION VALUE —— S5

ADD FIRST CORRECTION VALUE TO CORRECTION FREQUENCY —— S6

CONTROL OPERATING FREQUENCY OF COMPRESSOR —— S10

```
        ┌─────────────┐
        │   RETURN    │
        └─────────────┘
```

19

# FIG. 4

100, 200

110, 210          120, 220

PROCESSING CIRCUIT

PROCESSOR          MEMORY

# FIG. 5

100, 200

130, 230

PROCESSING CIRCUIT

HARDWARE

## FIG. 6

```
                    ┌─────────────┐
                    │    START    │
                    └─────────────┘
                           │
                           ▼
          ┌──────────────────────────────┐
          │  ACQUIRE CURRENT OUTLET       │──── S1
          │  TEMPERATURE Thw              │
          └──────────────────────────────┘
                           │
                           ▼
          ┌──────────────────────────────┐
          │  ACQUIRE CURRENT OUTSIDE AIR  │──── S2
          │  TEMPERATURE Ta               │
          └──────────────────────────────┘
                           │
                           ▼
          ┌──────────────────────────────┐
          │  CALCULATE FUNDAMENTAL        │──── S3
          │  FREQUENCY                    │
          └──────────────────────────────┘
                           │
                           ▼           S4
              ◇───────────────────────◇        NO
             ╱   CONDITION 1           ╲─────────────┐
            ◇  AND CONDITION 2 BOTH     ◇            │          S7
             ╲    SATISFIED?           ╱             ▼
              ◇───────────────────────◇      ◇───────────────◇         NO
                        │              ╱  CONDITION 3      ╲──────────┐
                       YES            ◇   SATISFIED?        ◇          │
                        │              ╲                   ╱           │
                        │               ◇───────────────◇             │
                        │                       │                      │
                        │                      YES                     │
                        │                       ▼                      │
                        │       ┌──────────────────────────────┐      │
                        │       │  ADD SECOND CORRECTION VALUE  │── S9 │
                        │       │  TO CORRECTION FREQUENCY      │      │
                        │       └──────────────────────────────┘      │
                        │                       │                      │
                        ▼                       │                      │
          ┌──────────────────────────────┐     │                      │
          │  ADD FIRST CORRECTION VALUE   │─ S6 │                      │
          │  TO CORRECTION FREQUENCY      │     │                      │
          └──────────────────────────────┘     │                      │
                        │◄────────────────────────────────────────────┘
                        ▼
          ┌──────────────────────────────┐
          │  CONTROL OPERATING FREQUENCY  │──── S10
          │  OF COMPRESSOR                │
          └──────────────────────────────┘
                        │
                        ▼
                ┌─────────────┐
                │   RETURN    │
                └─────────────┘
```

21

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012233626 A
- JP 2002243276 A
- EP 2261574 A1